Europäisches Patentamt

European Patent Office

Office européen des brevets

(19)

(11) Numéro de publication: **0 161 952 B1**

## FASCICULE DE BREVET EUROPEEN

(12)

(45) Date de publication de fascicule du brevet:
**15.05.91**

(51) Int. Cl.⁵: **C22C 9/01**, C22C 9/06, C22F 1/08, H01R 13/193

(21) Numéro de dépôt: **85400523.8**

(22) Date de dépôt: **19.03.85**

(54) **Procédé de conditionnement d'un object en alliage métallique à mémoire de forme à deux états de mémoire de forme réversibles.**

(30) Priorité: **12.04.84 FR 8405815**

(43) Date de publication de la demande:
**21.11.85 Bulletin 85/47**

(45) Mention de la délivrance du brevet:
**15.05.91 Bulletin 91/20**

(84) Etats contractants désignés:
**BE CH DE FR GB IT LI LU NL SE**

(56) Documents cités:
**EP-A- 0 081 372      EP-A- 0 105 733
FR-A- 2 144 348      FR-A- 2 301 602
FR-A- 2 301 604      US-A- 4 205 293
US-A- 4 435 229**

**" The remarkable shape-memory alloys ",
JEE, September 1983, p. 89-93**

**Petit Robert p. 748, 1490, 2111**

(73) Titulaire: **SOURIAU ET CIE
9-13, rue du Général Galliéni
F-92103 Boulogne-Billancourt(FR)**

(72) Inventeur: **Rizzo, Gilles
27, Rue Pierron
F-94000 Creteil(FR)**
Inventeur: **Dubertret, Alain
30, rue Edouard La Ferieres
F-92310 Sevres(FR)**
Inventeur: **Guenin, Gérard
15, rue du Bourbonnais
F-69330 Meyzieu(FR)**

(74) Mandataire: **Martin, Jean-Jacques et al
Cabinet REGIMBEAU 26, Avenue Kléber
F-75116 Paris(FR)**

Rank Xerox (UK) Business Services

# Description

La présente invention est relative à un procédé de conditionnement d'un objet constitué en alliage métallique à mémoire de forme pour la mémorisation réversible de deux états de mémoire de forme.

L'effet de mémoire de forme de certains alliages métalliques est déjà connu de l'état de la technique et a fait l'objet de nombreux travaux à la suite desquels de nombreuses publications en ont montré l'intérêt dans le domaine de la mécanique notamment.

Plus récemment, la mise en évidence d'un double effet de mémoire réversible pour ce type de matériau permet d'envisager un élargissement de son champ d'application.

Le double effet de mémoire réversible de ces matériaux a été notamment décrit dans la demande de brevet français 2 413 159 dans laquelle des objets réputés à double effet réversible de mémoire de forme peuvent être réalisés à partir de matériaux pulvérulents compactés à froid puis extrudés à chaud.

Si de tels objets présentent en effet un double effet de mémoire de forme réversible, celui-ci ne concerne pas des objets façonnés de telle sorte que l'objet, tout au moins ses états de forme mémorisés, ne peuvent être utilisés que dans des applications restreintes dans lesquelles l'état global de changement de forme de l'objet peut être seul utilisé.

En outre, le double effet de mémoire réversible a été décrit dans la demande de brevet français n° 2 279 857. Dans ce même document, le double effet de mémoire de forme réversible est inhérent au procédé de fabrication de l'article lui-même, de sorte que celui-ci, ou tout au moins ses états de forme mémorisés, ne peuvent être utilisés que dans des applications restreintes dans lesquelles l'état global de changement de forme de l'article peut être seul utilisé.

Enfin, l'article "The remarkable shape-memory alloys = the petals move to the temperature" paru dans JEE, Septembre 1983, p. 89, décrit un objet en forme de fleur dont les pétales, réalisés dans un alliage a mémoire de forme, peuvent se déployer et se refermer lorsque la température varie.

La présente invention a pour objet de proposer un procédé capable de conférer, à tout objet constitué en un matériau métallique comportant une transition de phase à l'état solide, susceptible d'acquérir une mémorisation de forme, des propriétés de mémoire de forme déterminées, fonctions d'un état de forme mémorisé ou forme initiale de l'objet.

Un autre objet de la présente invention est la mise en oeuvre d'un procédé capable de conférer, à tout objet constitué en un alliage métallique susceptible d'acquérir une mémorisation de forme, des propriétés de mémorisation de fonctions déterminées, lesquelles sont obtenues à partir d'un état de forme mémorisé de l'objet ou forme initiale de l'objet et de la structure de celui-ci.

Selon l'invention, un procédé de conditionnement d'un objet constitué en un matériau du type alliage métallique à mémoire de forme pour la mémorisation réversible de deux états de mémoire de forme, procédé consistant à soumettre l'objet, conformé aux formes et dimensions finales constituant un premier état de mémoire de forme, à un traitement thermique capable d'amener l'objet en état de phase cristallographique de type austénitique et à soumettre ledit objet à un refroidissement à une température voisine de la température ambiante, de façon à éviter l'apparition de phase cristallographique parasite, est remarquable en ce qu'il consiste en outre à soumettre ledit objet, en au moins une zone de déformation de celui-ci, à un processus dit d'éducation consistant à imposer audit objet une pluralité de cycles identiques consistant en une série de contraintes thermiques et/ou mécaniques, chaque cycle consistant à appliquer à ladite zone de déformation de l'objet une contrainte mécanique telle que celui-ci soit déformé, dans cette zone, dans son domaine élastique ou superélastique, de manière à amener ledit objet dans une position de forme voisine de son deuxième état de mémoire de forme et à soumettre ledit objet, la contrainte étant maintenue, à un abaissement de température susceptible d'amener ledit objet en état de phase martensitique, puis, la contrainte mécanique étant supprimée, à soumettre ledit objet à un réchauffement progressif pour ramener celui-ci en état de phase cristallographique de type austénitique dans son premier état de mémoire de forme.

Le procédé de l'invention trouve application notamment dans le domaine de la mécanique, de l'électromécanique et/ou de l'électronique, dans lesquels outre les propriétés mécaniques remarquables de ces matériaux, leurs propriétés électriques peuvent être utilisées.

Un autre procédé de conditionnement d'un objet constitué en un matériau du type alliage métallique à mémoire de forme pour la mémorisation réversible de deux états de mémoire de forme (I, II), procédé consistant :

- à soumettre l'objet, conformé aux formes et dimensions d'un état de forme initial voisin d'un premier état de mémoire de forme (I), à un traitement thermique capable d'amener ledit objet en état de phase cristallographique de type austénitique,
- à soumettre ledit objet à un refroidissement à une température voisine de la température ambiante, de façon à éviter l'apparition de

2

phase cristallographique parasite, est selon l'invention remarquable en ce qu'il consiste en outre :

- à soumettre ledit objet, en au moins une zone de déformation de celui-ci à un processus dit d'éducation consistant :

• sur un premier cycle :
a) à imposer audit objet ou au moins à ladite zone de celui-ci une contrainte thermique consistant en un abaissement de la température capable d'amener celui-ci en état de phase cristallographique martensitique,
b) à imposer audit objet au niveau de cette zone, dans l'état précité, une contrainte mécanique telle que ledit objet soit déformé, dans cette zone, dans son domaine dit plateau de déformation caoutchoutique, de manière à amener l'objet dans son deuxième état de mémoire de forme,
c) à définir, pour ledit objet, un état de forme dit intermédiaire (I), voisin dudit état de forme initial, et à imposer audit objet une limite de changement ultérieur de forme correspondant à l'état de forme dit intermédiaire (I),
d) à soumettre ledit objet, auquel la limite de changement de forme a été imposée, à un réchauffement progressif pour ramener celui-ci en état de phase cristallographique de type austénitique, de manière à induire, dans ladite zone de déformation dudit objet, du fait du réchauffement et du maintien de l'objet à ladite forme intermédiaire (I), des contraintes internes permettant la définition dudit état de forme intermédiaire (I) comme premier état de mémoire de forme,

• sur une pluralité de cycles identiques, à répéter la succession desdites contraintes thermiques et/ou mécaniques selon les étapes a) et d) entre l'état de mémoire de forme définitif (I), et le deuxième état de mémoire de forme (II).

L'invention sera mieux comprise à la lecture de la description détaillée et à l'observation des dessins ci-après, dans lesquels :

• Les figures 1a et 1b représentent différents schémas synoptiques des étapes du procédé de l'invention,
• Les figures 2a et 2b représentent en 1, 2, 3 respectivement 4 une illustration de la mise en oeuvre du procédé de l'invention conformément aux schémas des figures 1a et 1b respectivement,
• La figure 2c représente un diagramme d'efforts appliqués à l'objet au cours du procédé selon l'invention,
• la figure 3 représente en a, b, c différents modes de réalisation d'un objet susceptible d'être soumis au procédé de l'invention,

• la figure 4 représenté un objet obtenu suite à la mise en oeuvre du procédé de l'invention.

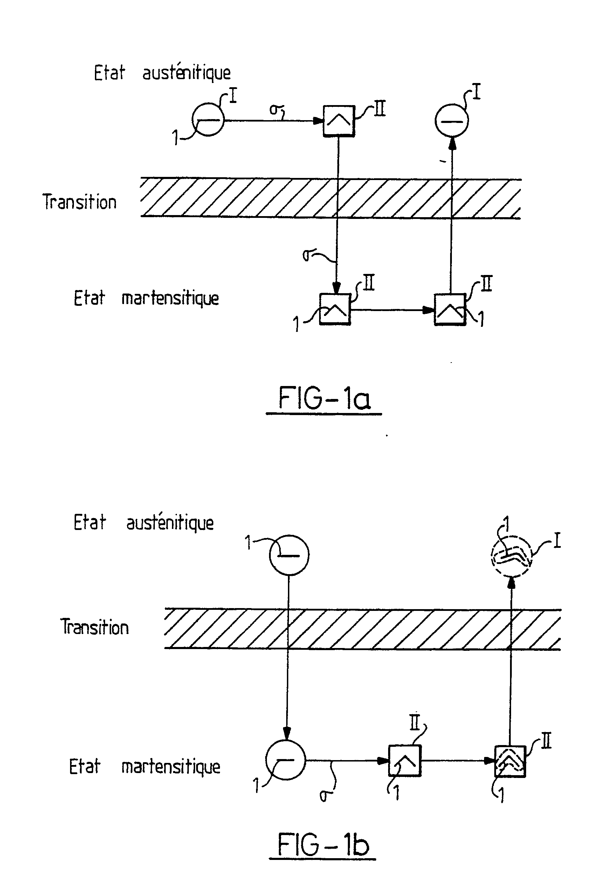

Le procédé de conditionnement d'un objet constitué en un matériau du type alliage métallique à mémoire de forme, objet de l'invention, permet la mémorisation réversible de deux états de mémoire de forme. Ce procédé s'applique à tout objet constitué en ce type de matériau. Par tout objet, on entend produit semi-fini ou produit intermédiaire tel que plaques, lingots, fils ou formes analogues sous lesquels les matériaux précités sont disponibles dans le commerce. On entend également par objet, tout objet façonné à l'aide d'opérations classiques de travail de ce type de matériau, permettant d'obtenir des formes complexes fonctionnelles. Le procédé de l'invention sera décrit tout d'abord en liaison avec les figures 1a et 1b.

L'objet référencé 1 sur les figures précitées, est conformé sensiblement aux formes et dimensions finales susceptibles de constituer un premier état de mémoire de forme préalablement à toute opération de conditionnement proprement dit. L'objet ainsi conformé est tout d'abord soumis à un traitement thermique capable d'amener l'ensemble de l'objet en état de phase cristallographique de type austénitique. Par soucis de simplification, l'objet sur les figures 1a et 1b a été représenté sous forme de lingot parallélépipédique, la forme de parallélépipède rectangle correspondant sensiblement à la forme et à la dimension finales constituant le premier état de mémoire de forme. Consécutivement, à la phase de traitement thermique précitée, l'objet est soumis à un refroidissement à une température voisine de la température ambiante. A titre d'exemple non limitatif, le traitement thermique capable d'amener l'objet en état de phase cristallographique de type austénitique peut être effectué par chauffage de l'objet à une température de l'ordre de 800 °C en atmosphère neutre, une atmosphère d'argon par exemple. Le refroidissement peut être effectué de manière non limitative, par un traitement du type trempage à l'eau. En fait le refroidissement est effectué en fonction de l'alliage utilisé de manière à éviter l'apparition gênante de phase cristallographique parasite. L'objet ayant atteint la température ambiante, celui-ci est soumis en au moins une zone de déformation de sa structure à un processus dit d'éducation.

Sur les figures 1a et 1b, l'application d'une contrainte thermique est représentée symboliquement par le franchissement de la zone cristallographique de transition, représentée par une zone hachurée, entre les états austénitique et martensitique. De même, l'application d'une contrainte mécanique extérieure est représentée par le symbole σ et la représentation de l'objet 1, plié dans un rectangle, l'objet 1 étant ainsi déformé. Par application de la contrainte mécanique externe σ, l'objet 1 étant en état de phase cristallographique austénitique dans le cas de la figure 1a, le même objet 1 ayant subi une contrainte thermique et se trouvant donc dans l'état cristallographique martensitique dans le cas de la figure 1b, l'objet est déformé dans la région de la zone de déformation précitée de manière à amener celui-ci dans un état ou position de forme II voisine de son deuxième état de mémoire de forme. Dans le cas de la figure 1a, l'objet à partir de l'état de forme II est ensuite soumis à une deuxième contrainte thermique le ramenant en un état cristallographique de type austénitique, l'objet 1 reprenant un état de forme voisin de son état de forme initial noté I. Au contraire, dans le cas de la figure 1b, une contrainte mécanique interne obtenue par maintien de l'objet dans un état de forme intermédiaire voisin de l'état de forme initial et constituant le premier état de mémoire de forme de l'objet, est appliquée au cours du retour en phase cristallographique austénitique. Sur la figure 1b, le maintien de l'objet est symbolisé par le contour fermé entourant l'objet 1 déformé en état de mémoire de forme II en état martensitique puis ayant repris sa forme intermédiaire en un état de mémoire de forme noté I, constituant en fait le premier état de mémoire de forme de l'objet.

Par état de mémoire de forme intermédiaire voisin de l'état de forme initial, on entend le retour à cette forme initiale ou à une forme voisine de celle-ci. Par exemple, dans le cas de pliage d'une tige, la forme dite intermédiaire peut correspondre à un retour à la forme initiale, au niveau de la déformation locale, pouvant atteindre 20 %.

Bien entendu, et de manière non limitative, chaque cycle ainsi que représenté en figure 1a et 1b, peut ou non être répété de façon à conférer à l'objet un degré de précision de retour au premier état de mémoire de forme noté I suffisant. Dans le cas du processus d'éducation schématisé en figure 1a, celui-ci peut consister en l'application répétitive des étapes correspondantes, constituant un cycle, sur 2 à 20 fois par exemple.

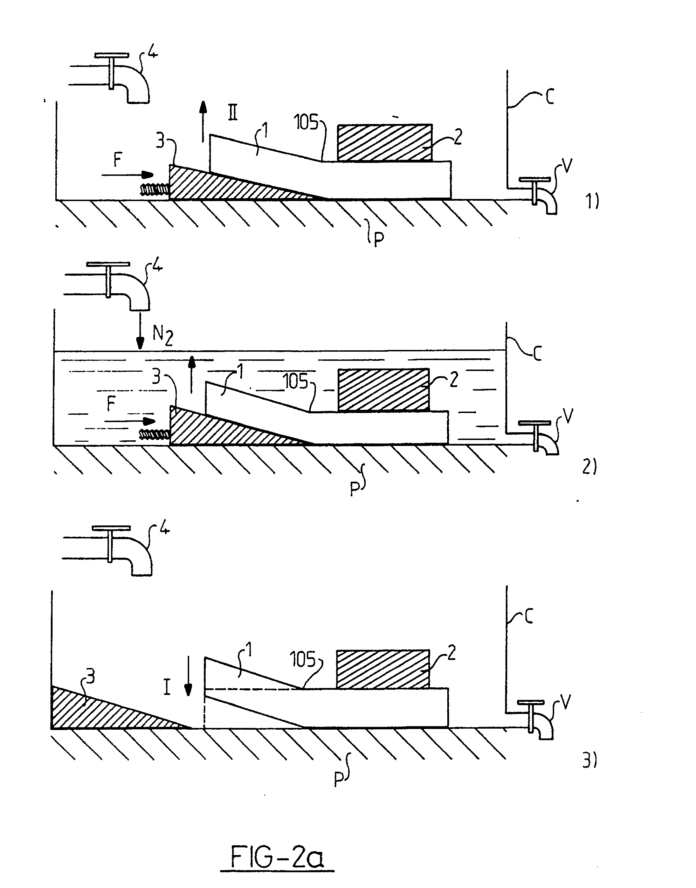

Le procédé de l'invention notamment dans le cas de la mise en oeuvre d'un processus d'éducation conformément à la figure 1a sera illustré dans sa mise en oeuvre effective au moyen de la figure 2a en 2a1, 2a2, 2a3.

Sur la figure 2a, les différentes étapes du processus d'éducation ont été représentées à titre d'exemple non limitatif. L'objet 1 constitué par exemple par le parallélépipède rectangle précité, est disposé dans une cuve C comportant un plan de travail P et assujetti sur ce plan de travail P par tout moyen de fixation 2. Un effort représenté par F est appliqué à l'objet au moyen d'un coin 3, lequel provoque au niveau de la zone de déformation 105, une contrainte mécanique telle que l'objet est déformé dans la zone 105, l'objet 1 étant ainsi amené dans une position de forme voisine de son deuxième état de mémoire de forme. La contrainte appliquée à l'objet dans ce but peut être appliquée de manière à déformer l'objet dans son domaine élastique ou plastique, ou au contraire dans son domaine, dit plateau de déformation, super-élastique ou caoutchoutique, tel que défini dans la thèse de Doctorat es Sciences, publiée par G.GUENIN, INSA Lyon (Institut National des Sciences Appliquées) en 1979. Cette position est notée II sur la figure 2a 1. La contrainte étant maintenue, l'objet 1 est soumis à un abaissement de température au moyen par exemple d'une source froide représentée par une vanne 4. La source froide peut consister, de manière avantageuse, en une source d'azote liquide. L'abaissement de température imposé à l'objet 1 dans son état de forme II permet d'amener l'objet en état de phase martensitique ainsi que représenté en figure 2a2. L'abaissement de température peut être effectué soit en amenant l'objet à une température inférieure à Ms (1a température Ms étant la température à laquelle la phase martensitique commence à se former d'elle-même), soit à une température $Ms_\sigma$, (la température $Ms_\sigma$ étant la température à laquelle la phase martensitique commence à se former en présence de contraintes), soit de préférence à une température inférieure à la température Mf (la température Mf étant la température à laquelle la totalité de l'alliage est transformée en phase martensitique).

Ainsi que représenté en figure 2a3, le réchauffement progressif en température ambiante de l'objet 1 est obtenu par vidange de la cuve C par ouverture d'une vanne V et retrait du coin 3. Lors du réchauffement, l'objet 1 retrouve une forme ou état de mémoire de forme très voisine de l'état initial noté I.

Par exemple, le traitement thermique capable d'amener l'objet 1 en état de phase cristallograhique de type austénitique est maintenu, la température de 800 °C étant atteinte, pendant une durée de 1 à 45 minutes. Le temps de maintien du traitement thermique précité influe en fait sur la taille du grain et l'on obtient, en fonction de ce temps de maintien, un système cristallographique monophasé avec texture plus ou moins grosse.

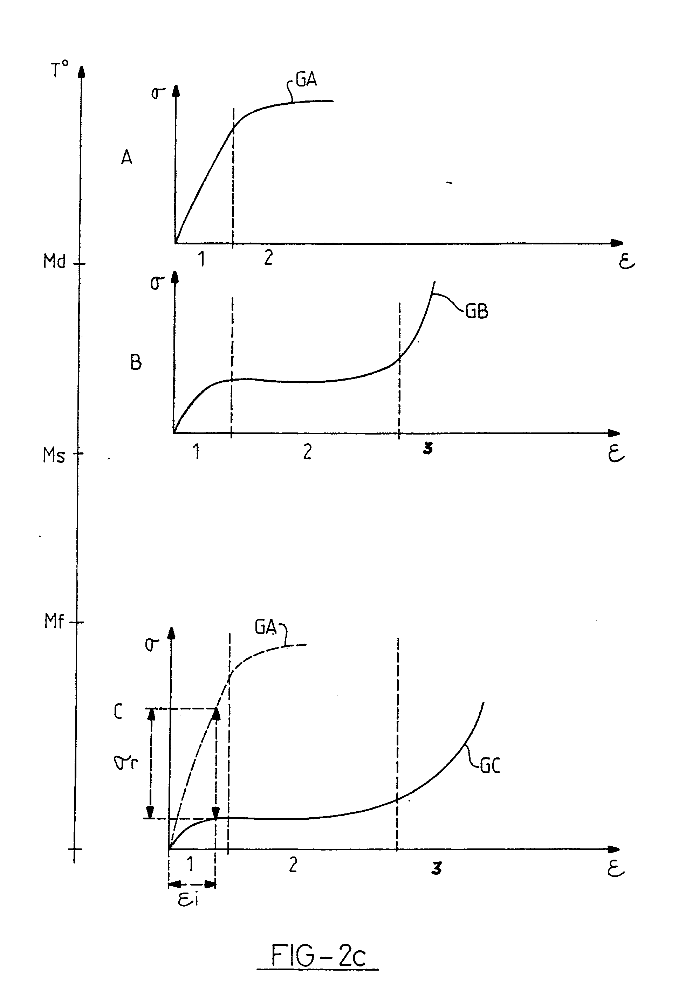

En outre, ainsi que représenté en figure 2c, la contrainte σ appliquée à la zone de déformation 105 est telle que la déformation ε obtenue soit située dans le domaine (2) dit plateau de déformation du matériau constituant l'objet. De préférence, la contrainte et la déformation appliquée dans la zone 105 correspondent à un point situé dans le domaine (2) au voisinage du domaine (3), lorsque l'objet ou la zone de déformation est à une température inférieure à la température Mf de fin de transition martensitique ou à une température supérieure à la température Ms de début de transition martensitique, mais inférieure à la température Md, température à laquelle la première aiguille de martensite apparaît dans le matériau lorsque celui-ci est soumis à une contrainte. Sur la figure 2c, en B et C les zones 2 sur les graphes contrainte-déformation GC, GB correspondent, dans des conditions de température et de contrainte précitées, aux domaines de pseudo-élasticité définissant le plateau de déformation. Au contraire, dans le cas où l'objet est à une température supérieure à la température Md précédemment définie, ainsi que représenté en figure 2c en A sur le graphe contrainte-déformation GA, la contrainte appliquée pour la mise en oeuvre du processus d'éducation est telle que l'objet soit déformé au niveau de la zone de déformation dans son domaine élastique 1, un léger débordement sur la zone plastique 2 pouvant être accepté.

Sur la figure 2a, en 2a1, 2a2, on a représenté l'application de la contrainte de l'objet 1 au moyen d'un coin. La contrainte mécanique appliquée à l'objet 1 peut bien entendu être appliquée au cours d'un formage, emboutissage, ou par tout moyen mécanique.

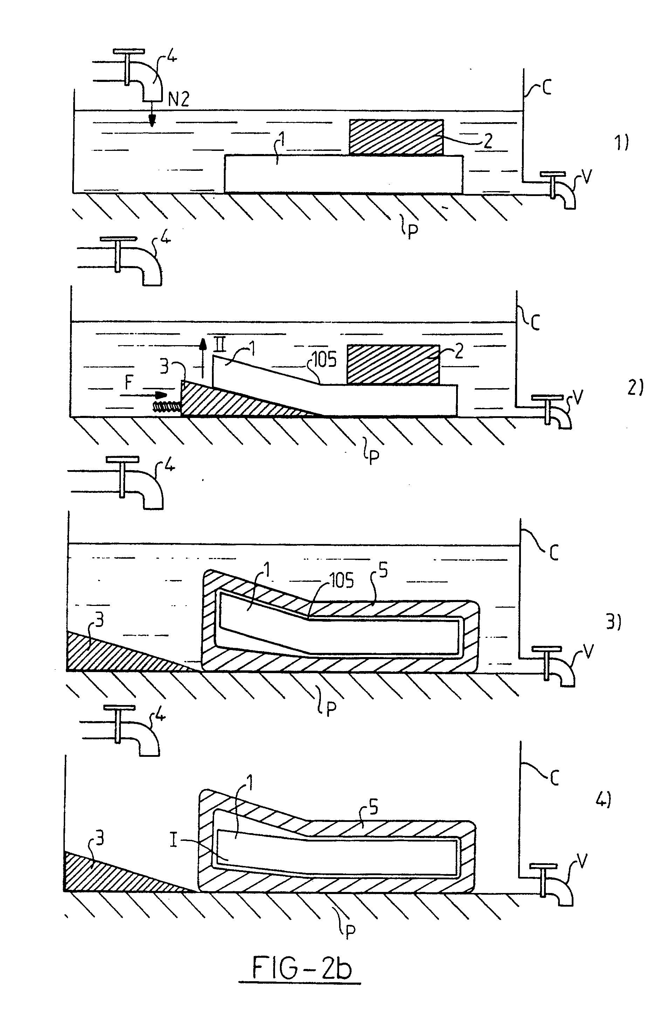

Le procédé de l'invention sera en outre illustré dans le cas de la mise en oeuvre d'un processus d'éducation, conformément au schéma de la figure 1b, au moyen de la figure 2b, en 2b1, 2b2, 2b3 et 2b4.

Bien entendu, le matériel nécessaire pour la mise en oeuvre du processus d'éducation conformément à la figure 1a, lequel avait été décrit en liaison avec la figure 2a, peut être utilisé pour la mise en oeuvre du processus d'éducation conformément au schéma de la figure 1b et les éléments de la figure 2b portant les mêmes références que les éléments représentés en figure 2a sont identiques à ces derniers.

Selon la figure 2b, l'objet 1 constitué en un lingot par exemple est assujetti grâce au moyen 2 sur le plan de travail P. Une contrainte thermique consistant en une variation de température capable d'amener l'objet 1 ou une zone de déformation de celui-ci en phase cristallographique martensitique est en premier lieu imposée en l'absence de déformation. Sur la figure 2b1, la cuve C est par exemple remplie d'azote liquide, l'objet étant recouvert par celui-ci. Il est rappelé que la forme de l'objet 1 dans cet état est la forme initiale. Puis, ainsi que représenté en figure 2b2,une contrainte mécanique extérieure est imposée à l'objet 1, dans cet état cristallographique, au niveau de la zone de déformation 105 de façon que l'objet soit déformé dans cette zone, dans son domaine dit plateau de déformation, de manière à amener l'objet 1 dans une position de forme notée II sur la figure 2b2 voisine de son deuxième état de mémoire de forme. Bien entendu, cette contrainte peut être appliquée au moyen du coin 3. Puis un état de forme intermédiaire voisin de l'état de forme initial est ensuite défini et imposé à l'objet 1. L'état de forme intermédiaire est imposé à l'objet 1 par l'imposition des limites de changement ultérieur de forme de l'objet aux limites correspondantes de l'état de forme intermédiaire. Sur la figure 2b3, la définition et l'imposition de l'état de forme intermédiaire à l'objet 1 ont été représentés schématiquement par une structure ou enceinte mécanique 5, fermée ou non, entourant l'objet 1 et capable d'autoriser le retour de l'objet 1 vers un état de forme voisin de l'état initial et ainsi appelé état de forme intermédiaire. Il est bien entendu que la mise en place de l'objet 1 dans l'enceinte mécanique 5, l'objet 1 étant dégagé des moyens d'assujettisement 2, peut être effectuée dans le bain d'azote liquide, ou, le passage de l'objet du bain d'azote à l'air libre dans l'enceinte mécanique 5 étant rendu minimum et l'inertie thermique de l'objet 1 étant suffisante, cette mise en place peut être effectuée hors du bain d'azote liquide. L'objet 1 auquel les limites de changement de forme ont été imposées est ensuite soumis à une nouvelle contrainte thermique consistant en un réchauffement à température ambiante pour ramener l'objet 1 en état de phase cristallographique de type austénitique. Le réchauffement de l'objet 1 et le maintien de celui-ci à la forme intermédiaire permettent d'induire des contraintes internes autorisant la définition de l'état de forme intermédiaire comme premier état de mémoire de forme noté I, sur la figure 2b4 où le bain d'azote liquide a été évacué. Le retour en état austénitique sous forme intermédiaire imposée εi s'accompagne du développement de contraintes internes σr très importantes ainsi que représenté schématiquement en figure 2c en C.

A titre d'exemple non limitatif, l'état de forme dit intermédiaire, est défini et imposé audit objet au moyen d'une matrice constituant l'enceinte mécanique 5. La matrice peut par exemple être constituée en acier inoxydable et doit présenter une structure mécanique lui permettant de résister au retour de l'objet 1 en état cristallographique austénitique, lequel s'accompagne de développement de contraintes internes importantes, lesquelles par réaction, sont appliquées sur les parois de la matrice. Les dimensions de la matrice et la position de l'objet 1 dans la matrice sont choisis de façon que les plus grandes dimensions de l'objet dans son état de forme intermédiaire correspondent aux dimensions internes les plus grandes.

Le processus d'éducation précité peut ou non être répété sur une pluralité de cycles. Il présente par rapport au processus d'éducation ou cycle défini selon la figure 1a, l'avantage d'une plus grande précision de déformation et de retour à l'état de mémoire de forme I. Bien entendu, toute combinaison des processus d'éducation tels que définis en liaison avec les figures 1a, 2a, et 1b, 2b en vue de conférer deux états de mémoire de forme mémorisés à un objet façonné ne sort pas du cadre de la présente invention.

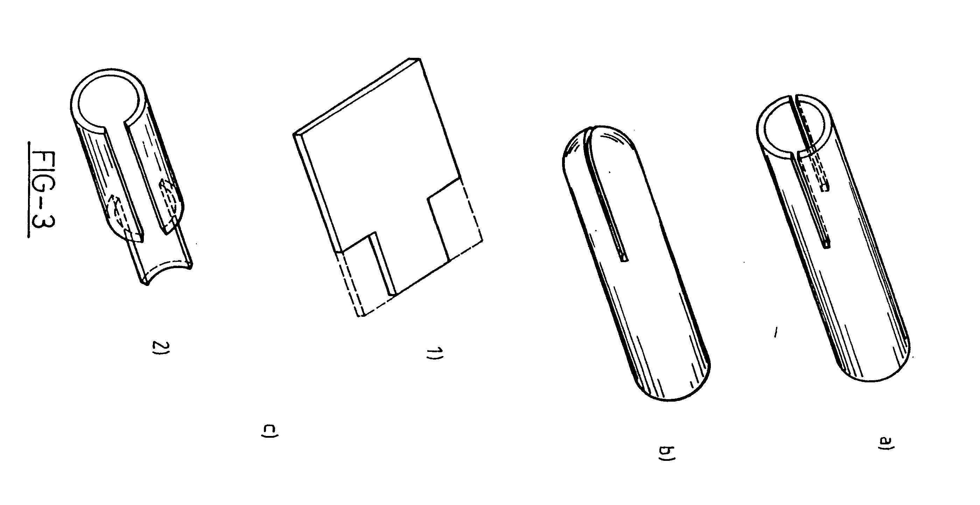

Un exemple de réalisation d'objets façonnés susceptibles, de manière avantageuse, d'être soumis au procédé de conditionnement de l'invention, sera maintenant décrit en liaison avec la figure 3.

Le matériau constitutif de l'objet façonné et consistant soit en une feuille, un lingot cylindrique, ou un tube par exemple, est tout d'abord soumis à un traitement à haute température de façon à amener ledit matériau à un état cristallographique dans lequel le matériau est rendu plus maléable. L'étape de traitement à haute température consiste à amener ledit matériau à une température de l'ordre de 500° C ou à une température permettant d'amener le matériau dans un état apte à un façonnage convenable. Cet échauffement peut également de préférence être effectué sous atmosphére neutre, sous pression d'argon. Successivement au traitement à haute température, le matériau est ensuite soumis à un refroidissement à une température voisine de la température ambiante. Ce refroidissement rapide peut également être effectué par un phénomène du type trempage à l'eau. En fonction du matériau et de la composition d'alliage métallique de celui-ci, le traitement du type trempage peut éventuellement être remplacé par un refroidissement par jet de gaz, qu'il s'agisse du refroidissement après traitement à haute température, ou après traitement thermique capable d'amener l'objet en état de phase cristallographique de type austénitique. Le matériau ainsi traité après les traitements précités, se trouve donc dans un état où les contraintes internes ont été supprimées et dans lequel il a été rendu plus maléable et où il a perdu sensiblement toute trace de mémoire de forme antérieure. Le matériau peut alors être façonné par fraisage, formage, décolletage, découpe, roulage ou analogues pour obtenir sa forme finale d'utilisation, laquelle correspondra à son état de mémoire stable à la température d'utilisation sensiblement.

En outre, lors du traitement thermique à haute température précité, la forme première du matériau peut être maintenue jusqu'à ce que l'état de contrainte interne nul du matériau soit obtenu, permettant en celà la réduction des effets de mémoire de forme parasites. En fait, lors de la mise en oeuvre de l'étape précitée pour un matériau en forme de bande ou de tige, cette opération revient en fait à effectuer une éducation du matériau ayant pour effet d'atténuer les effets de mémoire de forme parasites en n'autorisant qu'un changement de forme ultérieur éventuel que selon une direction privilégiée, la dimension longitudinale par exemple de la bande ou de la tige.

Des exemples de façonnage de l'objet seront maintenant donnés expressément au moyen de la figure 3. Le matériau précédemment traité peut consister en un tube cylindrique ainsi que représenté en figure 3a, une tige ou lingot cylindrique ainsi que représenté en figure 3b, une feuille métallique ainsi que représenté en figure 3c1. Le tube ou la tige peuvent être fraisés de manière à comporter respectivement une ou deux fentes latérales ménagées sur une partie de leur longueur. La feuille métallique représentée en figure c1, peut être découpée à dimension, parties représentées en traits mixtes, puis roulée par roulage de façon à former sensiblement un tube comportant par exemple une fente latérale sur toute sa longueur, ainsi que représenté en c2. Les objets façonnés ainsi décrits de manière non limitative peuvent alors avantageusement être soumis au processus d'éducation précédemment décrit. Le coin permettant d'appliquer la contrainte dans la zone de déformation, peut être avantageusement remplacé soit par un cône, mâle ou femelle, en fonction de la position ou deuxième état de mémoire ultérieur à obtenir, et de la nature de l'objet à éduquer ou par tout autre outil adapté à cet effet.

Des exemples d'alliages métalliques spécialement adaptés à la mise en oeuvre du procédé et à la fabrication d'objets façonnés, éduqués ou non, seront maintenant donnés de manière non limitative. Par alliages métalliques, on entend en fait composition utilisée sous forme, soit de composition inter-métallique, soit sous forme alliée. De préférence, les compositions précitées sont des compositions du groupe nickel-titane comportant sensiblement 50 % de titane et 50 % de nickel, plus des composés d'addition tels que le cobalt, cuivre, aluminium, permettant de modifier certains paramètres du matériau final par exemple la température de transition Ms et/ou les propriétés mécaniques et électriques, nickel-titane-fer comportant sensiblement 50 % de titane, 47 % de nickel et 3 % de fer, zinc-cuivre-aluminium, comportant sensiblement 4 % ± 0,5 % d'aluminium, 27 à 29 % de zinc, le reste du pourcentage étant constitué par du cuivre. Les pourcentages indiqués s'entendent en pourcentage atomique. Les pourcentages précités permettent par un choix judicieux des différents composants, de déterminer avec un bon degré de précision la température de transition Ms de l'alliage considéré. Des essais effectués à partir d'une composition comprenant 4 % d'aluminium, 28 % de zinc et le complément en cuivre ont permis d'obtenir une température de transition Ms égale à sensiblement -80° C. Bien entendu, les compositions précitées ne sont pas limitatives, il peut être ajouté notamment la composition ternaire cuivre-aluminium-nickel, laquelle permet d'obtenir des objets façonnés, éduqués ou non, présentant une meilleure tenue à la corrosion et au vieillissement.

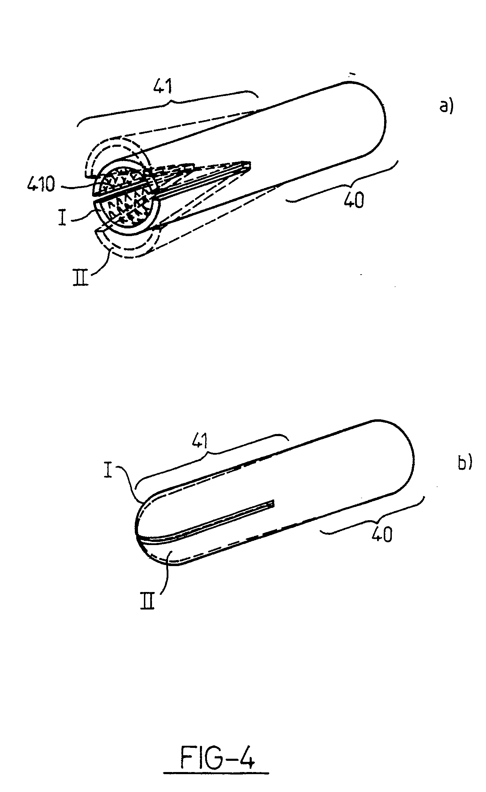

Des exemples d'objets obtenus suite à la mise en oeuvre du procédé de l'invention seront maintenant donnés dans l'application très avantageuse à des éléments de contact électrique au moyen de la figure 4. Ainsi que représenté en figure 4, l'élément de contact électrique femelle a ou mâle b comporte une partie fixe 40 destinée à recevoir un premier élément de circuit électrique à connecter et une partie active 41 de contact. La partie active 41 est mobile entre deux positions notées I, II, assurant respectivement l'existence ou la rupture de la pression de contact avec un deuxième élément de circuit sur lequel la partie femelle a ou même b peut être enfichée. L'élément de contact tel que représenté, correspond par exemple à l'objet façonné tel que décrit en figure 3a respectivement 3b. Il est constitué en un matériau à mémoire de forme et a été éduqué conformément au procédé de l'invention, de façon à posséder deux états de mémoire de forme mémorisés réversibles, correspondants aux positions I, II.

Dans le cas particulier de la mise en oeuvre du procédé de l'invention pour la réalisation d'éléments de contact électrique, le processus d'éducation tel que défini conformément au schéma des figures 1b et 2b pourra être avantageusement préféré en raison notamment de la meilleure précision dans le degré de retour aux états de forme I, II. En outre, et de manière préférentielle, l'objet 1 constitue un élément de contact mâle ou femelle dont le premier état de mémoire de forme noté I, correspond à l'état de forme intermédiaire sensiblement et dont le deuxième état de mémoire de forme noté II, correspond à l'objet après déformation appliquée à la zone de déformation, alors que les dimensions internes de la matrice, ou enceinte mécanique 5, sont égales aux dimensions de l'élément de contact femelle ou mâle dans son état de mémoire de forme I mémorisé correspondant à l'état de forme intermédiaire.

Ce processus d'éducation apparaît donc particulièrement adapté au domaine de la connectique, la matrice pouvant être constituée soit par une copie de l'élément de contact femelle ou mâle correspondant, soit par cet élément de contact lui-même. Bien entendu, le matériau à mémoire de forme, de manière non limitative constituant l'élément de contact appartient au groupe nickel-titane, nickel-aluminium, nickel-titane-fer, cuivre-zinc-aluminium, cuivre-aluminium-nickel. Des essais effectués notamment avec des éléments de contact, de structure telle que représentée en figure 4, ont permis d'assurer une reproductibilité d'utilisation tout à fait satisfaisante par transition entre les états de forme I et II supérieure à 100 cycles d'utilisation, pour une éducation consistant en une répétition du processus dit d'éducation, défini conformément au schéma des figures 1a et 2a, ne dépassant pas quelques unités. Ainsi, le procédé de l'invention est particulièrement remarquable en ce que, à partir de formes d'un objet façonné, déterminées de façon à pouvoir constituer un premier état de mémoire de forme de l'objet, il permet, par une application judicieuse du procédé à l'objet ou même en un point préférentiel de l'objet, une éducation de cet objet, lui conférant des propriétés de mémorisation de deux états de forme déterminés, lesquelles en liaison avec la structure mécanique de l'objet, ses propriétés physiques, sa conductibilité, permettent en fait une éducation de fonction, ici la fonction de connexion-déconnexion ou même de commutation. Le procédé de l'invention se distingue en cela des procédés antérieurs en ce que, notamment, l'éducation apparaît non plus comme une éducation structurelle liée à la seule déformation globale de l'objet, mais en une éducation ponctuelle, susceptible en cela en fonction des caractéristiques propres de l'objet, d'être rendue fonctionnelle.

On comprendra en particulier, que dans l'application précédemment décrite à un élément de contact électrique, la seule commande d'abaissement de température de l'objet en deçà de la température de transition Ms du matériau le constituant, permet immédiatement le passage en position II ou deuxième position de mémoire de forme, position autorisant, le contact étant rompu, toute déconnexion aisée. Le retour de l'élément de contact a une température située au delà de la température Ms permet alors le retour à la position de mémoire de forme initiale, ou première position. On notera enfin, que les éléments de contact femelle a, mâle b, peuvent ou non être éduqués de manière dite complémentée. Par état complémenté, on entend dans l'exemple précité, variation de positions spatiales opposées des parties mobiles des éléments femelle a ou mâle b, pour un même abaissement ou une même augmentation de température, en delà ou au-delà de la température de transition.

En outre, les éléments de contact ainsi obtenus peuvent être munis d'un revêtement protecteur conducteur, consistant en un dépôt d'or, d'argent, d'étain-plomb ou d'alliage de palladium. Une sous-couche appropriée peut en outre être prévue. Enfin, l'élément de contact électrique selon l'invention, peut être muni au niveau de sa partie active de contact 41, d'aspérités 410 susceptibles de permettre la réalisation d'un contact sur un conducteur isolé par déplacement d'isolant. Le revêtement d'étain-plomb peut en effet être utilisé en élargissement de son champ d'utilisation habituel, puisqu'il n'existe pratiquement plus de problème de frottement ni d'usure au niveau de chaque élément de contact.

Les objets façonnés constitués en un alliage métallique à mémoire de forme obtenus par la mise en oeuvre du procédé de l'invention sont remarquables en ce qu'ils comportent un premier état de mémoire de forme correspondant sensiblement à l'état de forme initial de l'objet obtenu par les opérations d'usinage les plus classiques, alors qu'un deuxième état de mémoire de forme, différent du premier, est obtenu à partir de ce dernier par modification locale de cette première forme en au moins un point ou zone de la structure de cet objet. Cette modification et le passage réversible d'un état de mémoire de forme à l'autre sont obtenus par modification de la température d'au moins la ou les zones correspondantes de la structure de l'objet. L'utilisation de tels objets n'est pas limitée au domaine de la connectique. En particulier, la modifacation de forme réversible précitée de tels objets, peut être utilisée avantageusement, en liaison avec d'autres paramètres physiques de ceux-ci, tels que conductibilité, résistance mécanique ou autres, afin de conférer à ceux-ci de nouvelles fonctions dont la caractéristique essentielle est l'autonomie fonctionnelle.Par autonomie fonctionnelle, on entend l'absence de nécessité d'intervention directe d'un opérateur en vue de la mise en oeuvre desdites fonctions, cette intervention se résumant à une seule modification de température. Une telle autonomie fonctionnelle apparaît particulièrement adaptée pour l'utilisation de tels objets en environnement hostile, dans lequel la présence d'un opérateur est exclue comme par exemple en environnement de rayonnement ionisant de grande intensité.

**Revendications**

1. Procédé de conditionnement d'un objet constitué en un matériau du type alliage métallique à mémoire de forme pour la mémorisation réversible de deux états de mémoire de forme, procédé consistant :
   - à soumettre l'objet, conformé aux formes et dimensions finales constituant un premier état de mémoire de forme, à un traitement thermique capable d'amener ledit objet en état de phase cristallographique de type austénitique,
   - à soumettre ledit objet à un refroidissement à une température voisine de la température ambiante, de façon à éviter l'apparition de phase cristallographique parasite,

   caractérisé en ce qu'il consiste en outre :

   - à soumettre ledit objet, en au moins une zone de déformation de celui-ci, à un processus dit d'éducation consistant à imposer audit objet une pluralité de cycles identiques consistant en une série de contraintes thermiques et/ou mécaniques, chaque cycle consistant à appliquer à ladite zone de déformation de l'objet une contrainte mécanique telle que celui-ci soit déformé, dans cette zone, dans son domaine élastique ou superélastique, de manière à amener ledit objet dans une position de forme voisine de son deuxième état de mémoire de forme et à soumettre ledit objet, la contrainte étant maintenue, à un abaissement de température susceptible d'amener ledit objet en état de phase martensitique, puis, la contrainte mécanique étant supprimée, à soumettre ledit objet à un réchauffement progressif pour ramener celui-ci en état de phase cristallographique de type austénitique dans son premier état de mémoire de forme.

2. Procédé de conditionnement d'un objet constitué en un matériau du type alliage métallique à mémoire de forme pour la mémorisation réversible de deux états de mémoire de forme (I, II), procédé consistant :
   - à soumettre l'objet, conformé aux formes et dimensions d'un état de forme initial voisin d'un premier état de mémoire de forme (I), à un traitement thermique capable d'amener ledit objet en état de phase cristallographique de type austénitique,
   - à soumettre ledit objet à un refroidissement à une température voisine de la température ambiante, de façon à éviter l'apparition de phase cristallographique parasite, caractérisé en ce qu'il consiste en outre :
   - à soumettre ledit objet, en au moins une zone de déformation de celui-ci à un processus dit d'éducation consistant :
     - sur un premier cycle :
       a) à imposer audit objet ou au moins à ladite zone de celui-ci une contrainte thermique consistant en un abaissement de la température capable d'amener celui-ci en état de phase cristallographique martensitique,
       b) à imposer audit objet au niveau de cette zone, dans l'état précité, une contrainte mécanique telle que ledit objet soit déformé, dans cette zone, dans son domaine dit plateau de déformation caoutchoutique, de manière à amener l'objet dans son deuxième état de mémoire de forme,

c) à définir, pour ledit objet, un état de forme dit intermédiaire (I), voisin dudit état de forme initial, et à imposer audit objet une limite de changement ultérieur de forme correspondant à l'état de forme dit intermédiaire (I),

d) à soumettre ledit objet, auquel la limite de changement de forme a été imposée, à un réchauffement progressif pour ramener celui-ci en état de phase cristallographique de type austénitique, de manière à induire, dans ladite zone de déformation dudit objet, du fait du réchauffement et du maintien de l'objet à ladite forme intermédiaire (I), des contraintes internes permettant la définition dudit état de forme intermédiaire (I) comme premier état de mémoire de forme,

• sur une pluralité de cycles identiques, à répéter la succession desdites contraintes thermiques et/ou mécaniques selon les étapes a) et d) entre l'état de mémoire de forme définitif (I), et le deuxième état de mémoire de forme (II).

3. Procédé selon la revendication 2, caractérisé en ce que l'état de forme dit intermédiaire est défini et imposé audit objet au moyen d'une matrice, les dimensions de la matrice étant choisies et l'objet étant placé dans ladite matrice de façon que les plus grandes dimensions de l'objet dans son état de forme intermédiaire correspondent aux dimensions internes les plus grandes de la matrice.

4. Procédé selon la revendication 3, caractérisé en ce que dans le cas de sa mise en oeuvre pour la réalisation d'un élément de contact, l'objet constituant un élément de contact mâle ou femelle dont le premier état de mémoire de forme correspond à l'état de forme intermédiaire et dont le deuxième état de mémoire de forme correspond à l'objet après déformation appliquée à la zone de déformation, les dimensions internes de la matrice sont choisies égales aux dimensions de l'élément de contact femelle ou mâle correspondant.

5. Procédé selon l'une des revendications 1 à 4, caractérisé en ce que dans le cas d'objets façonnés, ledit procédé consiste, préalablement à l'étape de traitement thermique capable d'amener ledit objet en état de phase cristallographique de type austénitique, à soumettre le matériau constitutif de l'objet à un traitement à haute température de façon à amener ledit matériau à un état cristallographique, dans lequel les contraintes internes sont supprimées.

6. Procédé selon la revendication 5, caractérisé en ce que, lors du traitement thermique à haute température, la forme première du matériau est maintenue jusqu'à ce que l'état de contrainte interne nul du matériau soit obtenu permettant en cela la réduction des effets de mémoire de forme parasites.

7. Procédé selon la revendication 1 ou 2, caractérisé en ce que lors de l'étape pendant laquelle l'objet est soumis à un traitement thermique capable d'amener celui-ci en phase austénitique, l'objet est amené à une température voisine de 800°C et maintenu à cette température entre 1 et 45 minutes.

8. Procédé selon la revendication 1 ou 2, caractérisé en ce que les étapes consistant à soumettre l'objet à un refroidissement à une température voisine de la température ambiante est effectué par un traitement du type trempage.

9. Procédé selon l'une des revendications précédentes, caractérisé en ce que, pendant le processus dit d'éducation, l'application de ladite contrainte mécanique est effectuée par déformation de l'objet.

10. Procédé selon l'une des revendications précédentes, caractérisé en ce que, pendant le processus dit d'éducation, ledit abaissement de température est effectué de manière à amener ledit objet à une température inférieure à sa température Mf de fin de transition martensitique, ladite variation de température étant susceptible d'amener au moins la ou les zones de déformation à l'état martensitique.

11. Procédé selon l'une des revendications précédentes, caractérisé en ce que l'objet est constitué en un matériau du type alliage métallique à mémoire de forme, du groupe nickel-titane, nickel-titane-fer, cuivre-zinc-aluminium, cuivre-aluminium-nickel, nickel-aluminium.

## Claims

1. A method for conditioning an object constructed from a material of the shape-memory metal alloy type for the reversible memorising of two shape-memory states, the method comprising:

- subjecting the object, conformed for the final shapes and dimensions constituting a first, shape-memory condition, to heat treatment capable of placing the said object in a crystallographic phase condition of the austenitic type,

- subjecting the said object to cooling to a temperature close to ambient temperature so as to avoid the appearance of any parasitic crystallographic phase,

characterised in that it also consists of:

- subjecting the said object, in at least one zone of deformation thereof, to a so-called "learning" process consisting of imposing upon the said object a plurality of identical cycles consisting of a series of thermal and/or mechanical stresses, each cycle consisting of applying to the said deformation zone of the object a mechanical stress such that the latter is deformed in that zone in its elastic or superelastic domain in such a way as to bring the said object into a shape condition close to its second shape-memory condition and of subjecting the said object, with the stress being maintained, to a reduction in temperature capable of placing the said object in a martensitic phase condition, then, when the mechanical stress is removed, of subjecting the said object to progressive reheating to restore this to a crystallographic phase of the austenitic type in its first shape-memory condition.

2.  A method for conditioning an object consisting of a material of the shape-memory metal alloy type for the reversible memorisation of two shape-memory conditions (I, II), a process consisting of:
- subjecting the object, conformed for the shapes and dimensions of an initial shape condition close to a first shape-memory condition (I), to heat treatment capable of placing the said object in a crystallographic phase condition of the austenitic type,
- subjecting the said object to cooling to a temperature close to ambient temperature in such a way as to avoid the appearance of any parasitic crystallographic phases,

characterised in that it also consists of:

- subjecting the said object, in at least one zone of deformation thereof, to a so-called learning process consisting of:
- in a first cycle:
a) imposing upon the said object or at least the said zone thereof a thermal stress consisting of a reduction in temperature capable of bringing the latter into the martensitic crystallographic phase condition,
b) imposing upon the said object in this zone, in the aforesaid condition, a mechanical stress such that the said object is deformed in this zone in the domain called the rubber-like deformation plateau in such a way as to bring the object into its second shape-memory condition,
c) defining, for the said object, an intermediate shape condition (I), close to the said initial shape condition, and of imposing upon the said object a limit in subsequent change of shape corresponding to the so-called intermediate shape condition (I),
d) subjecting the said object upon which the limit to the change of shape has been imposed to progressive reheating to restore the latter to a crystallographical phase condition of the austenitic type in such a way as to induce, within the said deformation zone of the said object, through the fact of reheating and maintaining the object in the said intermediate form (I), internal stresses whereby the said intermediate shape condition (I) is defined as a first shape-memory condition,
in a plurality of identical cycles, repeating the succession of the said thermal and/or mechanical stresses in accordance with stages a) and d) between the definitive shape-memory condition (I) and the second shape-memory condition (II).

3.  A method according to claim 2, characterised in that the so-called intermediate shape condition is defined and imposed upon the said object by means of a die, the dimensions of the die being selected and the object being placed in the said die in such a way that the largest dimensions of the object in its intermediate shape condition correspond to the largest internal dimensions of the die.

4.  A method according to claim 3, characterised in that when used to construct a contact member, where the object forms the male or female contact member whose first shape-memory condition corresponds to the intermediate shape condition and whose second shape-memory condition corresponds to the object after deformation applied to the deformation zone, the internal dimensions of the die are selected to be equal to the dimensions of the corresponding male or female contact member.

5. A method according to one of claims 1 to 4, characterised in that in the case of fashioned objects the said method consists, prior to the stage of heat treatment capable of placing the said object in a crystallographic phase of the austenitic type, of subjecting the material constituting the object to high temperature treatment in such a way as to place the said material in a crystallographic condition in which the internal stresses are suppressed.

6. A method according to claim 5, characterised in that during the high temperature heat treatment the first shape of the material is maintained until a condition of zero internal stress is obtained in the material thereby making it possible to reduce parasitic shape-memory effects.

7. A method according to claim 1 or 2, characterised in that during the stage during which the object is subjected to heat treatment capable of placing this in the austenitic phase the object is raised to a temperature around 800°C and is held at this temperature for between 1 and 45 minutes.

8. A method according to claim 1 or 2, characterised in that the stage consisting of subjecting the object to cooling to a temperature close to ambient temperature is performed by treatment of the quenching type.

9. A method according to one of the foregoing claims, characterised in that during the so-called learning process the said mechanical stress is applied by deformation of the object.

10. A method according to one of the foregoing claims, characterised in that during the so-called learning process the said reduction in temperature is brought about in such a way as to bring the said object to a temperature below its martensitic transition end temperature $M_f$, the said change in temperature being capable of bringing at least the deformation zone or zones to the martensitic condition.

11. A method according to one of the foregoing claims, characterised in that the object consists of a material of the shape-memory metal alloy type of the nickel-titanium, nickel-titanium-iron, copper-zinc-aluminium, copper-aluminium-nickel or nickel-aluminium group.

## Ansprüche

1. Verfahren zum Konditionieren eines aus einer Formgedächtnislegierung gebildeten Gegenstandes zur reversiblen Speicherung zweier Formgedächtniszustände mit

- Unterwerfen des den endgültigen, einen ersten Formgedächtniszustand darstellenden Formen und Dimensionen angepaßten Gegenstandes einer ersten thermischen Behandlung, durch die der Gegenstand in einen austenitischen kristallographischen Phasenzustand überführbar ist,

- Unterwerfen des Gegenstandes einer Abkühlung auf eine der Umgebungstemperatur benachbarte Temperatur derart, daß das Auftreten einer parasitären kristallographischen Phase vermieden wird,

dadurch gekennzeichnet, daß es weiterhin besteht aus:

- einem Unterwerfen des Gegenstandes in wenigstens einer Deformationszone desselben einem "Erziehung" genannten Prozeß, der darin besteht, dem Gegenstand eine Mehrzahl identischer Zyklen aufzuerlegen, die ihrerseits aus einer Reihe thermischer und/oder mechanischer Belastungen bestehen, wobei jeder Zyklus darin besteht, an der Deformationszone des Gegenstandes eine mechanische Belastung derart aufzubringen, daß dieser in dieser Zone in seinem elastischen oder superelastischen Bereich so verformt wird, daß der Gegenstand in eine seinem zweiten Formgedächtniszustand benachbarte Formposition überführt wird, und den Gegenstand unter Aufrechterhaltung der Belastung einer Temperaturabsenkung zu unterwerfen, die geeignet ist, den Gegenstand in den martensitischen Phasenzustand zu versetzen, alsdann unter Aufhebung der mechanischen Belastung den Gegenstand einer progressiven Wiedererwärmung zu unterwerfen, um diesen im austenitischen kristallographischen Phasenzustand wieder in seinen ersten Formgedächtniszustand zu überführen.

2. Verfahren zum Konditionieren eines aus einer Formgedächtnislegierung gebildeten Gegenstandes zur reversiblen Speicherung zweier Formgedächtniszustände (I, II) mit
   - Unterwerfen des den Formen und Dimensionen eines einem ersten Formgedächtniszustand (I) benachbarten Ausgangsformzustandes angepaßten Gegenstandes einer ersten thermischen Behandlung, durch die der Gegenstand in einen austenitischen kristallographischen Phasenzustand überführbar ist,
   - Unterwerfen des Gegenstandes einer Abkühlung auf eine der Umgebungstemperatur benachbarte Temperatur derart, daß das Auftreten einer parasitären kristallographischen Phase vermieden wird,

   dadurch gekennzeichnet, daß es weiterhin besteht aus:

   - einem Unterwerfen des Gegenstandes in wenigstens einer Deformationszone desselben einem "Erziehung" genannten Prozeß, der
   • bei einem ersten Zyklus
     darin besteht:
     a) dem Gegenstand oder wenigstens besagter Zone desselben eine thermische Belastung aufzuerlegen, bestehend in einer Temperaturabsenkung, durch die der Gegenstand in den martensitischen kristallographischen Phasenzustand überführbar ist,
     b) dem Gegenstand im Niveau dieser Zone im vorgenannten Zustand eine mechanische Belastung derart aufzuerlegen, daß der Gegenstand in dieser Zone in seinem kautschukartiges Deformationsplateau genannten Bereich so verformt wird, daß der Gegenstand in seinen zweiten Formgedächtniszustand überführt wird,
     c) für den Gegenstand einen sogenannten Zwischenformzustand (I) zu bestimmen, der dem Ausgangsformzustand benachbart ist, und dem Gegenstand eine spätere Formänderungsgrenze aufzuerlegen, die dem sogenannten Zwischenformzustand (I) entspricht,
     d) den Gegenstand, dem die Formänderungsgrenze auferlegt ist, einer progressiven Wiedererwärmung zu unterwerfen, um diesen in den austenitischen kristallographischen Phasenzustand so zu überführen, daß in die Deformationszone des Gegenstandes durch die Wiedererwärmung und Aufrechterhaltung des Gegenstandes in dem sogenannten Zwischenformzustand (I) innere Belastungen eingeführt werden, welche die Bestimmung des Zwischenformzustandes (I) als ersten Formgedächtniszustand gestatten,
   • bei einer Mehrzahl identischer Zyklen
   - einer Widerholung der Abfolge besagter thermischer und/oder mechanischer Belastungen gemäß den Schrittena) und d) zwischen dem endgültigen Formgedächtniszustand (I) und dem zweiten Formgedächtniszustand (II).

3. Verfahren nach Anspruch 2, dadurch gekennzeichnet, daß der sogenannte Zwischenformzustand bestimmt und dem Gegenstand mittels einer Matrize auferlegt wird, deren Abmessungen so gewählt sind und wobei der Gegenstand so in diese Matrize eingelegt wird, daß die größeren Dimensionen des Gegenstandes in seinem Zwischenformzustand den größeren Innenabmessungen der Matrize entsprechen.

4. Verfahren nach Anspruch 3, dadurch gekennzeichnet, daß im Falle seiner Ausführung zur Verwirklichung eines Kontaktelementes, wobei der Gegenstand ein männliches oder weibliches Kontaktelement darstellt, dessen erster Formgedächtniszustand dem Zwischenformzustand und dessen zweiter Formgedächtniszustand dem Gegenstand nach in der Deformationszone aufgebrachter Verformung entspricht, die Innenabmessungen der Matrize gleich den Dimensionen des entsprechenden weiblichen oder männlichen Kontaktelements gewählt werden.

5. Verfahren nach einem der Ansprüche 1 bis 4, dadurch gekennzeichnet, daß im Falle fassonierter Gegenstände das Verfahren vor dem thermischen Behandlungsschritt, durch den der Gegenstand in den austenitischen kristallographischen Phasenzustand überführbar ist, in einem Unterwerfen des den Gegenstand bildenden Materials einer Behandlung bei hoher Temperatur besteht, um das Material in einen kristallographischen Zustand zu überführen, in dem die inneren Belastungen aufgehoben sind.

6. Verfahren nach Anspruch 5, dadurch gekennzeichnet, daß bei der thermischen Behandlung bei hoher Temperatur die erste Form des Materials aufrechterhalten wird, bis der Nullzustand der inneren Belastung des Materials erreicht ist, um hierdurch die Reduzierung parasitärer Formgedächtniseffekte zu gestatten.

7. Verfahren nach Anspruch 1 oder 2, dadurch gekennzeichnet, daß bei dem Schritt, im Verlauf dessen der Gegenstand einer thermischen Behandlung unterworfen wird, um diesen in die austenitische Phase zu überführen, der Gegenstand bei einer Temperatur in der Nähe von 800° C überführt und bei dieser Temperatur während 1 bis 45 Minuten gehalten wird.

8. Verfahren nach Anspruch 1 oder 2, dadurch gekennzeichnet, daß die Schritte, die darin bestehen, den Gegenstand einer Abkühlung auf eine Temperatur in der Nähe der Umgebungstemperatur zu unterwerfen, durch eine Tauchbehandlung vollzogen werden.

9. Verfahren nach einem der voranstehenden Ansprüche, dadurch gekennzeichnet, daß während des "Erziehung" genannten Prozesses die Anwendung der mechanischen Belastung durch Deformation des Gegenstandes vollzogen wird.

10. Verfahren nach einem der voranstehenden Ansprüche, dadurch gekennzeichnet, daß während des "Erziehung" genannten Prozesses die Temperaturabsenkung derart vollzogen wird, daß der Gegenstand auf eine Temperatur gebracht wird, die unterhalb seiner Endtemperatur Mf des martensitischen Übergangs liegt, wobei diese Temperaturveränderung geeignet ist, wenigstens die Deformationszone oder die Deformationszonen in den martensitischen Zustand zu überführen.

11. Verfahren nach einem der voranstehenden Ansprüche, dadurch gekennzeichnet, daß der Gegenstand aus einem metallischen Formgedächtnis-Legierungsmaterial aus der Gruppe: Nickel-Titan, Nickel-Titan-Eisen, Kupfer-Zink-Aluminium, Kupfer-Aluminium-Nikkel, Nickel-Aluminium gebildet ist.

Etat austénitique

Transition

Etat martensitique

<u>FIG-1a</u>

Etat austénitique

Transition

Etat martensitique

<u>FIG-1b</u>

FIG-2a

FIG-2b

FIG-2c

a)

b)

1)

c)

2)

FIG-3

FIG-4